# EUROPÄISCHE PATENTSCHRIFT

(11) **EP 1 850 254 B1**
(45) Veröffentlichungstag und Bekanntmachung des Hinweises auf die Patenterteilung: **31.12.2008**
(21) Anmeldenummer: 06008962.0
(22) Anmeldetag: 28.04.2006
(51) Int. Cl.: G06F 21/00

(54) **Verfahren zur Zuordnung von Messgeräten zu personenbezogenen Datenbanken**
Method for assigning measuring devices to personal databases
Procédé destiné à l'affectation d'appareils de mesure à des banques de données relatives à des personnes

(43) Veröffentlichungstag der Anmeldung: 31.10.2007
(73) Patentinhaber: InterComponentWare AG, 69190 Walldorf (DE)
(72) Erfinder: Heinze, Peter Dr., 69190 Walldorf (DE); Knoop, Hayo Dr., 69190 Walldorf (DE)
(74) Vertreter: Müller-Boré & Partner Patentanwälte

(56) Entgegenhaltungen:
- WO-A-01/26021
- DE-A1- 10 156 745
- US-A- 5 960 085
- US-B1- 6 732 105

## Beschreibung

Die vorliegende Erfindung betrifft ein Verfahren, ein System und ein Computerprogrammprodukt zum autorisierten Zugriff auf eine Datenbank und insbesondere zum automatischen Erzeugen von Zugriffsautorisierungen.

Zur Eingabe von Daten in eine personenbezogene Datenbank werden heute Berechtigungskonzepte verwendet, die meist rollenbasiert realisiert werden. Hierbei werden für einen Bearbeiter eines Datenbankeintrags die notwendigen Rechte (Create, Retrieve, Update, Delete, CRUD) zum Erstellen, Abrufen, Aktualisieren oder Löschen von Einträgen vergeben. Werden die Daten mit einem Messgerät erfasst, erfolgt die Eingabe unter einer Bearbeitungsautorisierung und die Identifikation des betreffenden Datensatzes durch meist manuelle Selektion. Sowohl Bearbeiter, als auch Datensatz sind somit bei der Eingabe eindeutig bestimmt.

Für das Beispiel einer elektronischen Gesundheitsakte unter Hoheit des Patienten erscheint der Bearbeiter der Datenbank als Berechtigter zum Zugriff auf die Akte. Mit dem genannten Konzept ist zunächst keine Eingabe von Daten ohne Autorisierung eines Bearbeiters möglich. Erlaubt man einen automatischen Zugriff auf die Datenbank mit der Rolle eines Systembenutzers, also ohne Eingriff durch einen autorisierten Bearbeiter, muss noch der personenbezogene Datensatz identifiziert werden. Insbesondere bei der Übertragung von sensiblen Daten über große Netzwerke ist eine sichere und nach außen anonyme Zuordnung von Daten zu entsprechenden benutzerspezifischen Datensätzen (z.B. Gesundheitsakten) einer Datenbank ein kritischer Aspekt und auf eine zuverlässige, diskrete und schnelle Verwaltung von Zugriffsautorisierungen angewiesen.

WO 01/26021 A1 beschreibt ein System zum Fernzugriff auf bzw. zur Fernerfassung von medizinische/n Daten eines Patienten. Dazu umfasst das System ein elektronisches Patientendatensammelsystem zum lokalen Sammeln von Daten in Bezug auf einen medizinischen Zustand eines Patienten. Die erfassten bzw. gesammelten Daten werden über eine drahtlose Schnittstelle an ein entferntes Netzwerkcomputersystem übertragen. Die übertragenen Daten umfassen dabei eine Patientenidentifikation. Das System erlaubt nur autorisierten Benutzern den Zugriff auf Daten im Netzwerkcomputersystem.

Es ist somit Aufgabe der vorliegenden Erfindung ein Verfahren und ein System zum Zugriff eines Datenerfassungsgeräts eines Benutzers auf eine Datenbank über ein Netzwerk bereitzustellen, wobei eine zuverlässigere Autorisierung zum sicheren Freigeben von autorisierten Zugriffen und Unterbinden von nicht autorisierten Zugriffen bei gleichzeitiger Vereinfachung der Bedienung durch einen Benutzer erreicht werden soll.

Diese Aufgabe wird durch ein Verfahren, ein System und ein Computerprogrammprodukt mit den in den Ansprüchen 1, 9, 15, 19 bzw. 25 angegebenen Merkmalen gelöst. Bevorzugte Ausführungsformen sind Gegenstand der abhängigen Ansprüche.

Somit stellt die vorliegende Erfindung ein Verfahren zur Zugriffsautorisierung auf eine Datenbank bereit, welches die Schritte umfasst:
Herstellen einer Signalverbindung zu einem Datenerfassungsgerät eines Benutzers über ein Initialisierungsnetz bzw. Autorisierungsnetz;
   - Erfassen von Initialisierungsdaten für das Datenerfassungsgerät über das Initialisierungsnetz bzw. Autorisierungsnetz, wobei die Initialisierungsdaten umfassen:
      - eine Benutzeridentifikation zur eindeutigen Bestimmung bzw. Identifikation des Benutzers; und
      - eine Geräteidentifikation zur eindeutigen Bestimmung bzw. Identifikation des Datenerfassungsgerätes;
   - Erzeugen einer Geräteautorisierung, in der die Geräteidentifikation in Abhängigkeit von der Benutzeridentifikation einem benutzerspezifischen Datenblock bzw. Datensatz der Datenbank zugewiesen wird;
   - Herstellen einer Signalverbindung zum Datenerfassungsgerät über ein vom Initialisierungsnetz verschiedenes Datennetz, insbesondere ein Telematiknetz;
   - Erfassen von Zugriffsdaten von dem Datenerfassungsgerät über das Datennetz, insbesondere das Telematiknetz, wobei die Zugriffsdaten umfassen:
      -- die Geräteidentifikation; und
      -- zumindest eine Zugriffsanweisung zur Bestimmung einer Zugriffsoperation auf die Datenbank; und
   - Ausführen der Zugriffsoperation auf den benutzerspezifischen Datenblock bzw. Datensatz der Datenbank in Abhängigkeit von den erfassten Zugriffsdaten und der erzeugten Geräteautorisierung.

Als Datenerfassungsgerät könnte dabei insbesondere ein Messgerät und/oder ein Eingabe- und/oder Ausgabegerät, wie zum Beispiel ein Anzeigegerät zum Einsatz kommen. Ein Messgerät ist dabei vorzugsweise ausgelegt, persönliche Daten und insbesondere Gesundheitsdaten des Benutzer zu erfassen. Diese persönlichen Daten werden durch das Verfahren vorzugsweise im benutzerspezifischen Datenblock der Datenbank gespeichert. Dazu werden sie insbesondere über das Datennetz an die Datenbank übertragen. Insbesondere bei großen Datennetzen, auf die viele Benutzer Zugriff haben, ist es besonders wichtig, zum einen eine eindeutige Zuordnung von persönlichen Daten zum zugehörigen Datenblock bzw. Datensatz der Datenbank sicherzustellen und zum anderen die Anonymität des Datentransfers im Datennetz zu gewährleisten. Durch das erfindungsgemäße Verfahren ist es insbesondere möglich, die Benutzeridentifikation, die zur korrekten Zuordnung von persönlichen Daten zu den entsprechenden benutzerspezifischen Datenblöcken einer Datenbank erforderlich ist, von den erfassten persönlichen Daten, insbesondere Messdaten, zu trennen und gleichzeitig die Eindeutigkeit der Zuordnung sicherzustellen. Dabei sind das Initialisierungsnetz und das Datennetz vorzugsweise als getrennte, insbesondere unabhängige Netze ausgebildet. Außerdem umfassen die Zugriffsdaten vorzugsweise nicht die Benutzeridentifikation.

Besonders vorteilhaft ist auch die Möglichkeit der automatisierten Autorisierung des Zugriffs für ein Datenerfassungsgerät ohne einen erforderlichen Eingriff durch einen Systembetreuer der Datenbank. Neue Geräte können sehr einfach, sicher und schnell implementiert bzw. eingebunden werden. Dazu wird die Geräteautorisierung vorzugsweise automatisch erzeugt. Alternativ könnte die Identifikationszuordnung auch durch einen autorisierten Systembetreuer erzeugt werden. Die Geräteautorisierung stellt dabei eine Zuordnung zumindest einer Geräteidentifikation zu zumindest einem Datenblock bzw. Datensatz der Datenbank dar. Die Geräteautorisierung umfasst somit vorzugsweise zu jeder registrierten bzw. initialisierten Geräteidentifikation eine Verknüpfung einen Verweis zu zumindest einem zugehörigen Datensatz bzw. Datenblock.

Die Geräteidentifikation stellt dabei vorzugsweise eine vom Gerätehersteller vergebene Gerätenummer bzw. Geräteadresse bzw. ein Teil hiervon dar. Die Geräteautorisierung könnte insbesondere als Referenztabelle ausgebildet werden, die jeder registrierten Gerätenummer die entsprechende Datensatzadresse zuweist. Die Datensatzadresse wird bei der Erzeugung der Geräteautorisierung durch die Benutzeridentifikation eindeutig bestimmt, die als Teil der Initialisierungsdaten erfasst wird.

Vorzugsweise ist die Datenbank eine Gesundheitsdatenbank und der Benutzer ein Patient. Der benutzerspezifische Datenblock der Datenbank stellt dabei vorzugsweise eine Gesundheitsakte des Patienten bzw. ein Teil hiervon dar, in der persönliche Gesundheitsdaten über den allgemeinen und/oder aktuellen Gesundheitszustand und/oder Therapieanweisungen abgelegt sind bzw. werden. Als Messgerät könnte dabei beispielsweise ein Blutdruckmessgerät, ein Elektrokardiograph, eine Waage oder ein Gerät zur Messung der Sauerstoffsättigung zum Einsatz kommen. Die entsprechenden Messdaten könnten als Teil der Zugriffsdaten über das Datennetz zusammen mit einem Schreibbefehl erfasst und im zugehörigen Datenblock der Datenbank gespeichert werden. Als initialisiertes bzw. registriertes Anzeigegerät könnte ein PDA (personal digital assistant) dienen, von dem ein Lesebefehl über das Datennetz als Zugriffsdaten erfasst wird. In Reaktion darauf könnten vom zugehörigen Datenblock Informationen zur Anzeige am PDA über das Datennetz übertragen werden. Beispielsweise könnten Therapieanweisungen eines behandelnden Arztes an einen Patienten übermittelt werden.

Vorzugsweise wird eine zum Erfassen der Initialisierungsdaten über das Initialisierungsnetz hergestellte (ein-, bi- oder multidirektionale) Signalverbindung zum Datenerfassungsgerät unterbrochen, bevor die Zugriffsdaten über das Datennetz erfasst werden. Durch eine solche zeitliche Trennung von Benutzeridentifizierung und Übertragung von Zugriffsdaten auf die Datenbank wird die Datensicherheit bzw. die erwünschte Anonymität weiter verbessert.

Vorzugsweise umfasst das Initialisierungsnetz ein Telekommunikationsnetz, insbesondere ein Telefonnetz und das Erfassen der Benutzeridentifikation umfasst vorzugsweise ein Erfassen einer vom Benutzer gewählten Telefonnummer bzw. ein Teil hiervon. Diese Ausgestaltung des Initialisierungsnetzes ist besonders flexibel implementierbar und insbesondere leicht verfügbar. Dabei eignen sich sowohl kabelgebundene Telefonnetze bzw. Festnetz als auch Mobilfunk- bzw. Handynetze. Besonders bevorzugt registriert sich ein Benutzer vor der Initialisierung eines Datenerfassungsgerätes bei der Datenbank bzw. beim Betreiber der Datenbank. Daraufhin wird ihm ein benutzerspezifischer bzw. persönlicher Bereich der Datenbank bzw. ein benutzerspezifischer bzw. persönlicher Zugang zur Datenbank eingerichtet. Außerdem wird ihm eine benutzerspezifische Telefonnummer zugewiesen und vorzugsweise vertraulich mitgeteilt. Diese Telefonnummer bildet damit eine vorzugsweise ein-eindeutige Zuordnung des Datenbankabschnitts zu dem Benutzer. Die Telefonnummer stellt damit vorzugsweise die Benutzeridentifikation dar. Es wäre auch denkbar eine Benutzeridentifikation mit anderen Daten zu kopplen, die eine ein-eindeutige Identifikation des Benutzers zulassen, z.B. Global Positioning System (GPS) - Daten, oder ähnliches.

Vorzugsweise umfasst das Erfassen der Geräteidentifikation ein Erfassen eines von dem Datenerfassungsgerät erzeugten und über das Initialisierungsnetz, insbesondere Telefonnetz, übertragenen akustischen bzw. modulierten Identifikationssignals. Vorzugsweise wird dieses Identifikationssignal automatisch erfasst. Insbesondere wird durch dieses Identifikationssignal das Datenerfassungsgerät vorzugsweise eindeutig identifiziert bzw. bestimmt. Damit ist eine automatisierte Erzeugung der Geräteautorisierung besonders einfach möglich.

Vorzugsweise werden im Schritt des Erzeugens der Geräteautorisierung der erfassten Geräteidentifikation erlaubte Zugriffsoperationen auf den benutzerspezifischen Datenblock der Datenbank in Abhängigkeit von der Benutzeridentifikation und/oder der Geräteidentifikation zugewiesen. Solche Zugriffsoperationen können insbesondere Schreib-, Lese- oder andere Zugriffsoperationen zur Erzeugung, Veränderung oder zum Löschen von Daten sein. Insbesondere umfassen die Zugriffsoperationen vorzugsweise die Operationen: "Create" (C) und/oder "Retrieve" (R) und/oder "Update" (U) und/oder "Delete" (D) und werden besonders bevorzugt als Zeichenkette im Format (CRUD) festgelegt. Die Art der erlaubten Operationen hängt dabei vorzugsweise vom Benutzeridentifikation und/oder der Geräteidentifikation ab.

Vorzugsweise erlaubt die Geräteautorisierung einen Schreibzugriff, und die Zugriffsanweisung umfasst vom Datenerfassungsgerät erfasste benutzerspezifische Daten und einen Schreibbefehl. Besonders bevorzugt umfasst das Verfahren außerdem einen Schritt des Schreibens der benutzerspezifischen Daten in den benutzerspezifischen Datenblock der Datenbank.

Alternativ oder zusätzlich erlaubt die Geräteautorisierung vorzugsweise einen Lesezugriff, und die Zugriffsanweisung umfasst vorzugsweise einen Lesebefehl. Besonders bevorzugt umfasst das Verfahren einen Schritt des Ausgebens von benutzerspezifischen Daten aus dem benutzerspezifischen Datenblock der Datenbank an das Datennetz zur Übertragung an das Datenerfassungsgerät des Benutzers.

Ein einem weiteren Aspekt stellt die vorliegenden Erfindung ein Verfahren zum autorisierten Zugriff auf eine Datenbank bereit, welches die Schritte umfasst:
- Herstellen einer Signalverbindung zu einem Datenverwaltungssystem über ein Initialisierungsnetz bzw. Autorisierungsnetz;
- Übermitteln von Initialisierungsdaten für ein Datenerfassungsgerät eines Benutzers über das Initialisierungsnetz bzw. Autorisierungsnetz an ein Datenverwaltungssystem, wobei die Initialisierungsdaten umfassen:
   -- eine Benutzeridentifikation zur eindeutigen Bestimmung bzw. Identifikation des Benutzers; und
   -- eine Geräteidentifikation zur eindeutigen Bestimmung bzw. Identifikation des Datenerfassungsgerätes;
- Herstellen einer Signalverbindung zum Datenverwaltungssystem über ein vom Initialisierungsnetz verschiedenes Datennetz, insbesondere ein Telematiknetz; und
- Übermitteln von Zugriffsdaten von dem Datenerfassungsgerät über das Datennetz, insbesondere das Telematiknetz, an das Datenverwaltungsystem, wobei die Zugriffsdaten umfassen:
   -- die Geräteidentifikation; und
   -- zumindest eine Zugriffsanweisung, welche eine Zugriffsoperation auf die Datenbank festlegt.

Vorzugsweise wird eine zum Übermitteln der Initialisierungsdaten über das Initialisierungsnetz hergestellte Signalverbindung zum Datenverwaltungssystem unterbrochen, bevor die Zugriffsdaten über das Datennetz übermittelt werden. Bei dem Initialisierungsnetz und dem Datennetz handelt sich also vorzugsweise um verschiedene Netze. Vorzugsweise basieren die Netze auf verschiedenen Technologien.

In einer bevorzugten Ausführungsform umfasst das Initialisierungsnetz ein Telekommunikationsnetz und der Schritt des Übermittelns der Benutzeridentifikation umfasst vorzugsweise einen Schritt des Wählens einer benutzerspezifischen Telefonnummer. Besonders bevorzugt umfasst der Schritt der Übermittelns der Geräteidentifikation einen Schritt des Übertragens eines gerätespezifischen akustischen Identifikationssignals über das Telekommunikationsnetz an das Datenverwaltungssystem. Dabei ist die Geräteidentifikation vorzugsweise als akustisches Identifikationssignal kodiert und also solches in einem Speicherchip im Datenerfassungsgerät gespeichert. Vorzugsweise wird das akustische Identifikationssignal durch Betätigen eines Initialisierungselements am Datenerfassungsgerät über einen Lautsprecher, insbesondere einen Piezolautsprecher ausgegeben. Das Signal wird dann vorzugsweise über den Hörer bzw. das Mikrophon eines Telefons erfasst und über ein Telefonnetz zum Datenverwaltungssystem übertragen.

Das Datennetz bzw. Telematiknetz umfasst vorzugsweise ein GPRS- und/oder UMTS-Netz. Damit ist ein flexibler Einsatz des Datenerfassungsgeräts möglich. Insbesondere ist das Datenerfassungsgerät vorzugsweise tragbar bzw. mobil ausgestaltet und kann damit vorzugsweise auch unterwegs eingesetzt werden. Auch ein Einsatz in einem Fahrzeug ist denkbar.

Vorzugsweise umfasst das Erfassen der Benutzeridentifikation und/oder das Erfassen der Geräteidentifikation ein Erfassen einer Datensatzidentifikation zur eindeutigen Bestimmung des benutzerspezifischen Datenblocks der Datenbank.

Insbesondere könnte durch die Datensatzidentifikation die Art der Messdaten bestimmt sein. Die Benutzeridentifikation und/oder die Geräteidentifikation umfasst somit vorzugsweise mehrere Identifikationsdatenblöcke. Die Identifikationsdaten bzw. Identifikationsdatenblöcke könnten insbesondere gemäß den HL7 OID Spezifikationen aufgebaut sein.

Gemäß einem weiteren Aspekt stellt die vorliegende Erfindung ein Datenverwaltungssystem zur Zugriffsautorisierung auf eine Datenbank bereit, welches umfasst:
- die Datenbank mit einer Vielzahl von benutzerspezifischen Datenblöcken bzw. Datensätzen;
- eine Initialisierungsschnittstelle zum Erfassen von Initialisierungsdaten für ein Datenerfassungsgerät eines Benutzers über ein Initialisierungsnetz, wobei die Initialisierungsdaten umfassen:
   -- eine Benutzeridentifikation zur eindeutigen Bestimmung bzw. Identifikation des Benutzers; und
   -- eine Geräteidentifikation zur eindeutigen Bestimmung bzw. Identifikation des Datenerfassungsgerätes;
- eine vorzugsweise von der Initialisierungsschnittstelle verschiedene Datenschnittstelle zum Erfassen von Zugriffsdaten von dem Datenerfassungsgerät über ein vom Initialisierungsnetz verschiedenes Datennetz, insbesondere ein Telematiknetz, wobei die Zugriffsdaten die Geräteidentifikation und zumindest eine Zugriffsanweisung zur Bestimmung einer Zugriffsoperation auf die Datenbank umfassen;
- eine Initialisierungseinrichtung zum Erzeugen einer Geräteautorisierung, in der die Geräteidentifikation ein Abhängigkeit von der Benutzeridentifikation einem benutzerspezifischen Datenblock der Datenbank zugewiesen wird; und
- eine Zugriffssteuereinrichtung, zum Ausführen der Zugriffsoperation auf den benutzerspezifischen Datenblock bzw. Datensatz der Datenbank in Abhängigkeit von den erfassten Zugriffsdaten und der erzeugten Geräteautorisierung.

Die Initialisierungseinrichtung des Datenverwaltungssystems ist also insbesondere ausgelegt, die über die Initialisierungsschnittstelle als Teil der Initialisierungsdaten erfasse Geräteidentifikation einem benutzerspezifischen Datenblock bzw. Datensatz der Datenbank zuzuweisen, wobei der benutzerspezifische Datenblock durch die erfasste Benutzeridentifikation bestimmt bzw. festgelegt wird.

Vorzugsweise umfasst die Initialisierungsschnittstelle eine Schnittstelle eines Telekommunikationsnetzes. Besonders bevorzugt ist das System ausgelegt, eine vom Benutzer gewählte Telefonnummer zu erfassen. In einer bevorzugten Ausführungsform umfasst das System außerdem eine Serviceeinrichtung, die ausgelegt ist, in Abhängigkeit von der erfassten Telefonnummer dem Benutzer eine Vielzahl von auswählbaren Servicediensten anzubieten. Die Serviceeinrichtung ist dabei vorzugsweise ausgelegt, eine Initialisierungsroutine für ein Datenerfassungsgerät bzw. ein Datenerfassungssystem des Benutzers in Reaktion auf eine entsprechende Auswahl durch den Benutzer zu starten. Diese Auswahl durch den Benutzer erfolgt vorzugsweise durch Betätigen einer Taste am Telefon oder durch Übertragen eines akustischen Auswahlsignals. Vorzugsweise werden durch das Starten der Initialisierungsroutine weitere über das Telefonnetz übertragene Daten an die Initialisierungseinrichtung weitergeleitet.

Vorzugsweise ist die Initialisierungseinrichtung ausgelegt, die von der Initialisierungsschnittstelle erfasste Telefonnummer als Benutzeridentifikation und ein über das Telekommunikationsnetz übertragenes akustisches Identifikationssignal als Geräteidentifikation zu erfassen.

Insgesamt ist das Datenverwaltungssystem vorzugsweise ausgelegt, ein Verfahren zum Zugriffsautorisierung gemäß der vorliegenden Erfindung oder einer bevorzugten Ausführungsform davon auszuführen.

In einem weiteren Aspekt stellt die vorliegende Erfindung ein Datenerfassungssystem zum autorisierten Zugriff auf eine Datenbank bereit, welches umfasst:
- zumindest ein Datenerfassungsgerät, insbesondere ein Messgerät zum Erfassen von Messdaten und/oder eine Eingabe- und/oder Ausgabeeinrichtung, insbesondere Anzeigeeinrichtung, zum Eingeben bzw. Ausgeben, insbesondere Anzeigen, von Eingabe- bzw. Ausgabeinformationen;
- einen Geräteidentifikationsspeicher, in der eine Geräteidentifikation zur eindeutigen Bestimmung bzw. Identifikation eines Datenerfassungsgerätes kodiert gespeichert ist;
- eine Initialisierungsschnittstelle zum Übermitteln der Geräteidentifikation des Datenerfassungsgerätes über ein Initialisierungsnetz an ein Datenverwaltungssystem; und
- eine Datenschnittstelle zum Übermitteln von Zugriffsdaten von dem Datenerfassungssystem über ein vom Initialisierungsnetz verschiedenes Datennetz, insbesondere ein Telematiknetz an das Datenverwaltungssystem derart, dass die Zugriffsdaten die Geräteidentifikation und zumindest eine Zugriffsanweisung zur Bestimmung einer Zugriffsoperation auf die Datenbank umfassen.

Als Eingabedaten könnten hierbei insbesondere Messdaten manuell in das Datenerfassungsgerät eingegeben werden. Alternativ oder zusätzlich ist auch eine automatische Eingabe bzw. ein automatisches Erfassen von Daten insbesondere Messdaten realisierbar. Als Ausgabedaten könnten dem Benutzer insbesondere Informationen beispielsweise über einen Therapieplan angezeigt werden.

Das System umfasst vorzugsweise zumindest ein Messgerät und ein Basisgerät, die als separate Komponenten ausgebildet sind und über ein lokales Netzwerk in Signalverbindung zueinander stehen. Das Messgerät und das Basisgerät weisen also jeweils zumindest eine lokale Netzwerkschnittstelle bzw. lokale Schnittstelle auf, über die sie an das lokale Netzwerk koppeln. Anstelle des Messgerätes oder zusätzlich könnte das System auch ein Anzeigegerät umfassen, das über das lokale Netzwerk zur Signalübertragung mit dem Basisgerät und/oder mit dem Messgerät in Signalverbindung steht.

Das lokale Netzwerk ist besonders bevorzugt als abgeschlossenes bzw. gesichertes Netzwerk ausgestaltet, das vorzugsweise nur für den Benutzer oder mit Zustimmung des Benutzers bzw. nach Freigabe durch den Benutzer zugänglich ist. Vorzugsweise umfasst das lokale Netzwerk ein drahtloses Netzwerk, insbesondere ein Bluetooth-Netzwerk und/oder wireless local area network (WLAN). Besonders bevorzugt umfasst das System eine Vielzahl von Messgeräten, die über das lokale Netzwerk zur Signalübertragung mit dem Basisgerät und/oder untereinander verbunden sind.

Vorzugsweise weisen zumindest ein Messgerät bzw. Anzeigegerät und das Basisgerät jeweils eine eigene Initialisierungsschnittstelle auf. Besonders bevorzugt weist jedes dieser Geräte eine eigene Geräteidentifikation auf. Damit kann jedes einzelne Geräte initialisiert und im Falle eines Defektes oder einer Neuanschaffung unabhängig von den anderen Geräten ersetzt werden.

Insbesondere ist vorzugsweise in dem zumindest einen Messgerät und in dem Basisgerät jeweils eine eigene Geräteidentifikation kodiert. Dazu weist jedes der Geräte vorzugsweise einen integrierten Speicherchip auf, in dem die jeweilige Geräteidentifikation hinterlegt ist. Die eindeutige Geräteidentifikation wird vorzugsweise bereits bei der Herstellung des jeweiligen Gerätes und/oder des jeweiligen integrierten Speicherchips hinterlegt und wird somit vorzugsweise bereits bei der Herstellung des Gerätes dem jeweiligen Gerät zugeordnet. Durch die erfindungsgemäßen Verfahren und mit den erfindungsgemäßen Systemen ist es dabei nicht notwendig, dass vor der Zuordnung einem bestimmten Gerät eine ausgewählte Geräteidentifikation zugewiesen wird oder dass die zugeordnete Geräteidentifikation registriert wird oder am bzw. im Gerät sichtbar identifiziert wird. Statt dessen kann die Zuordnung einer Geräteidentifikation zu einem Gerät zufällig erfolgen. Sie sollte lediglich ein-eindeutig sein, d.h. jede Geräteidentifikation sollte nur einem einzigen Gerät zugeordnet werden, insbesondere nur in einem einzigen Speicherchip kodiert sein.

Besonders bevorzugt umfasst die Initialisierungsschnittstelle einen Lautsprecher, insbesondere einen Piezolautsprecher. Damit ist das Datenerfassungssystem sehr flexibel mit verschiedenen Initialisierungsnetzen zur Übertragung akustischer Signale einsetzbar. Die Datenschnittstelle umfasst vorzugsweise eine Schnittstelle zu einem GPRS- und/oder UMTS-Netz.

Insgesamt ist das Datenerfassungssystem vorzugsweise ausgelegt, ein Verfahren zum autorisierten Zugriff auf eine Datenbank gemäß der vorliegenden Erfindung oder einer bevorzugten Ausführungsform davon auszuführen. Vorzugsweise stellt die Erfindung somit ein Datenorganisationssystem bereit, das zumindest ein erfindungsgemäßes Datenerfassungssystem und zumindest ein erfindungsgemäßes Datenverwaltungsystem umfasst, die zumindest zeitweise über das Initialisierungsnetz bzw. das Datennetz in Signalverbindung stehen.

In einem weiteren Aspekt stellt die vorliegende Erfindung ein Computerprogrammprodukt, insbesondere gespeichert auf einem computerlesbaren Speichermedium, bereit, das, wenn es in einem Computersystem geladen wird, dieses veranlasst ein Verfahren gemäß der vorliegenden Erfindung oder einer ihrer oben beschriebenen bevorzugten Ausführungsformen auszuführen.

Die Erfindung wird nachfolgend mit Bezug auf die begleitende Zeichnung einer bevorzugter Ausführungsform beispielhaft beschrieben. Dabei zeigt:
- Fig. 1:: eine schematische Darstellung eines Netzwerks von Systemen gemäß einer bevorzugten Ausführungsform der vorliegenden Erfindung.
- Fig. 2:: eine schematische Darstellung eines beispielhaften Systems zum Implementieren der Erfindung.

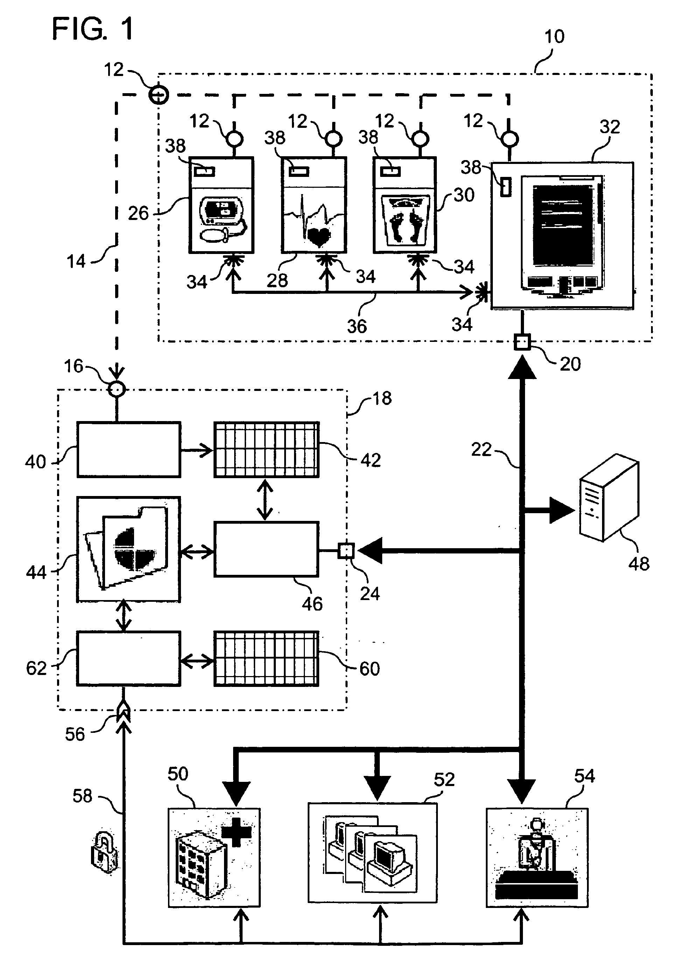

Fig. 1 zeigt eine schematische Darstellung eines Netzwerks zur telemedizinischen Überwachung, das gemäß einer bevorzugten Ausführungsform der vorliegenden Erfindung verwirklicht ist und anhand dessen die vorliegende Erfindung beispielhaft erläutert wird. Dabei handelt es sich insbesondere um ein telemedizinisches Netzwerk zur Überwachung und Betreuung von Patienten mit chronischen Erkrankungen. Dabei wird ein Patient mit einem Datenerfassungssystem 10 gemäß einer bevorzugten Ausführungsform der vorliegenden Erfindung ausgestattet. Das Datenerfassungssystem 10 weist eine Initialisierungsschnittstelle 12 auf, über die es mittels eines Initialisierungs- bzw. Autorisierungsnetzes bzw. einer Initialisierungs- bzw. Autorisierungsverbindung 14 mit einer Initialisierungsschnittstelle 16 eines Datenverwaltungssystems 18 verbunden werden kann. Außerdem weist das Datenerfassungssystem 10 eine Datenschnittstelle bzw. Telematikschnittstelle 20 auf, über die es mittels eines Datennetzes bzw. Telematiknetzwerks 22 mit einer Datenschnittstelle bzw. Telematikschnittstelle 24 des Datenverwaltungssystems in Signalverbindung steht.

In der dargestellten bevorzugten Ausführungsform umfasst das Datenerfassungssystem 10 eine Vielzahl von einzelnen Messgeräten bzw. Datenerfassungsgeräten. Insbesondere sind ein Blutdruckmessgerät 26, ein EKG-Gerät bzw. Elektrokardiograph 28 und eine Waage 30 vorgesehen. Mit Hilfe dieser Geräte kann der Patient vorzugsweise selbst, also ohne ärztliche oder pflegerische Unterstützung Messungen über den eigenen Gesundheitszustand vornehmen. Diese Messungen können insbesondere in häuslicher Umgebung erfolgen. Der Patient muss sich also nicht in einer Klinik befinden. Dazu sind die Geräte vorzugsweise mobil ausgestaltet und können insbesondere sogar im Haus oder auch außer Hauses mitgenommen werden. Die vorliegenden Erfindung eignet sich damit besonders bevorzugt für Betreuung chronisch kranker Patienten, wie z.B. Patienten mit chronischer Herzinsuffizienz.

Außerdem umfasst das Datenerfassungssystem 10 in der gezeigten Ausführungsform vorzugsweise einen tragbaren Computer 32 nach Art eines PDA (personal digital assistant), der vorzugsweise mit geeigneten Schnittstellen und einer entsprechenden Software zur Verwaltung und/oder Übertragung medizinischer Messdaten und/oder Diagnoseergebnissen und/oder Therapieanweisungen ausgestattet ist. Dieser PDA 32 dient vorzugsweise als Basisgerät des Datenerfassungssystems 10. Dazu weist das Basisgerät 32 ein lokale Schnittstelle 34 auf, über die es mittels eines lokalen Netzwerks 36 mit den Messgeräten 26, 28, 30 in (ein-, bi- oder multidirektionaler) Signalverbindung steht. Hierfür sind auch die einzelnen Messgeräte 26, 28, 30 jeweils mit einer lokalen Schnittstelle 34 ausgestattet. Das lokale Netzwerk 36 und die lokalen Schnittstellen 34 könnten beispielsweise auf einer kabellosen Netzverbindung, insbesondere einer vorzugsweise kurzreichweitigen Funkverbindung wie Bluetooth basieren. Alternativ oder zusätzlich könnte das lokale Netzwerk 36 auch ein kabelgebundenes Netzwerk (z.B. auf Basis von USB-Verbindungen) umfassen.

Über das lokale Netzwerk können Messdaten zwischen den einzelnen Geräten ausgetauscht oder auch die Konfiguration einzelner Geräte verändert werden. Insbesondere können über das lokale Netzwerk Messdaten von den Messgeräten an den PDA 32 übertragen werden. Vom PDA 32 wiederum können die Messdaten über die Datenschnittstelle 20 des Datenerfassungsystems 10, die in der gezeigten Ausführungsform am bzw. im Basisgerät 32 (PDA) ausgebildet ist, in das Datennetz 22 übertragen und damit an das Datenverwaltungssystem 18 übermittelt werden. Das Datennetz bzw. Telematiknetzwerk 22 könnte dabei insbesondere eine vorzugsweise langreichweitige Funkverbindung, beispielsweise auf Basis einer GPRS- und/oder UMTS-Verbindung beruhen. Auch sind alternativ oder zusätzlich auch kabelgebundene Netzwerke einsetzbar. Das Datennetz könnte insbesondere auch ein wireless local area network (WLAN) umfassen bzw. sein.

In der gezeigten bevorzugten Ausführungsform des erfindungsgemäßen Datenerfassungssystems 10 weisen alle einzelnen Geräte 26, 28, 30, 32 jeweils eine Initialisierungsschnittstelle 12 auf. Über diese Initialisierungsschnittstelle können die einzelnen Geräte vorzugsweise unabhängig - voneinander über das Initialisierungsnetz 14 mit der Initialisierungsschnittstelle 16 des Datenverwaltungssystems 18 in Signalverbindung gebracht werden.

Vorzugsweise umfassen die einzelnen Geräte jeweils eine eigenen Geräteidentifikation. Diese Geräteidentifikation ist vorzugsweise als ein-eindeutige Gerätenummer im bzw. am jeweiligen Gerät kodiert bzw. diesem zugewiesen. Insbesondere könnte bereits bei der Herstellung des jeweiligen Gerätes, insbesondere der Messgeräte und des Basisgeräts, eine eindeutige Geräteidentifikation reserviert werden.

Diese Geräteidentifikation könnte insbesondere als eindeutige Gerätenummer bzw. Gerätecode diesem Gerät zugewiesen werden. Diese eindeutige Geräteidentifikation wird vorzugsweise vom Gerätehersteller bzw. unter Hoheit des Geräteherstellers für das produzierte Gerät vergeben und im bzw. am Gerät gespeichert. Um die Eindeutigkeit der Geräteidentifikation insbesondere in Bezug auf das Datenverwaltungssystem bzw. Datenbanksystem zu gewährleisten und um somit Kollisionen bei der Identifikation verschiedener Geräte im Zusammenhang mit dem Datenverwaltungssystem bzw. Datenbanksystem zu vermeiden, kann bei der Erstellung der Geräteidentifikation ein vom Anbieter der Datenbank bereitgestellter Parameterraum für die Geräteidentifikation berücksichtigt werden. Insbesondere könnte der Geräteidentifikation ein vom Anbieter der Datenbank vergebener Namensraum vorangestellt werden.

Besonders bevorzugt wird die Geräteidentifikation in einer kodierten Geräteidentifikationsschaltung, insbesondere in einem Speicherchip (z.B. PROM, EPROM, EEPROM), im jeweiligen Gerät bzw. dem Datenerfassungssystem 10 abgespeichert und für die Initialisierung des Geräts bzw. Datenerfassungssystems 10 über die Initialisierungsschnittstelle 12 an das Datenverwaltungssystem 18 übertragen. Vorzugsweise umfasst die Initialisierungsschnittstelle 12 einen Lautsprecher, insbesondere einen Piezolautsprecher, bzw. einen Audioausgang bzw eine Audioschnittstelle. Die kodierte Geräteidentifikationsschaltung ist vorzugsweise als Tonwahl-IC ausgestaltet und zur Ansteuerung des Lautsprechers derart ausgelegt, dass der Lautsprecher ein der Geräteidentifikation entsprechendes akustisches Signal ausgibt. Hierzu umfasst das jeweilige Messgerät bzw. das Datenerfassungssystem 10 vorzugsweise ein Aktivierungselement 38, das insbesondere vom Benutzer, also im vorliegenden Fall dem Patienten, bedient werden kann, um die Ausgabe der Geräteidentifikation über die Initialisierungsschnittstelle 12, also insbesondere den Lautsprecher, und insbesondere an das Initialisierungsnetz 14, zu veranlassen.

Das Initialisierungsnetz 14 umfasst vorzugsweise ein Telefonnetz, über das temporär zur Initialisierung des Datenerfassungssystems 10 bzw. eines Datenerfassungsgerätes 26, 28, 30, 32 die Initialisierungsverbindung 14 aufgebaut wird. Vorzugsweise geschieht dies durch Wählen einer dem Benutzer zugewiesenen eindeutigen Telefonnummer. Diese Telefonnummer dient vorzugsweise zur eindeutigen Identifizierung des jeweiligen Benutzers, insbesondere Patienten. Alternativ könnte auch eine zentrale Nummer für das Datenverwaltungssystem 18, also das Datenbanksystem, anwählbar sein. Eine Identifikation des Benutzers könnte dann durch Eingabe einer persönlichen Nummer über die Tastatur des Telefons oder durch Übermittlung eines akustischen Signals erfolgen.

Vorzugsweise wird nach einer derartigen Übermittlung der Benutzeridentifikation über die aufgebaute Telefonverbindung als Initialisierungsnetz 14 durch Betätigen des Aktivierungselements 38 eines Geräts die zugehörige Geräteidentifikation als akustisches Signal übertragen. Das Aktivierungselement 38 könnte insbesondere ein am Gerät angebrachter Schalter oder Taster sein. Das am Lautsprecher des Gerätes erzeugte akustische Identifikationssignal wird dabei vom Mikrofon oder einer geeigneten Schnittstelle des Telefons erfasst und als elektrisches bzw. elektromagnetisches Signal, abhängig von der Technologie des verwendeten Telefonnetzes an das Datenverwaltungssystem übertragen. Zusammen mit der Benutzeridentifikation bildet die Geräteidentifikation zumindest einen Teil der Initialisierungsdaten. Nach der Übermittlung der Initialisierungsdaten wird die Initialisierungsverbindung 14 vorzugsweise wieder getrennt.

Die Initialisierung kann für alle Geräte gleichzeitig oder aber auch nacheinander, insbesondere unabhängig voneinander erfolgen. In einer anderen bevorzugten Ausführungsform wäre es auch denkbar, dass nur einige der Geräte eine Initialisierungsschnittstelle 12 aufweisen. Insbesondere könnte das Basisgerät 32 eine Initialisierungsschnittstelle 12 aufweisen, während die Initialisierung der anderen Geräte durch Übertragung ihrer jeweiligen Geräteidentifikation über das lokale Netzwerk 36 zum Basisgerät 32 und durch Ausgabe der übertragenen Geräteidentifikation über die Initialisierungsschnittstelle 12 des Basisgeräts erfolgt.

Nach der Initialisierung der jeweiligen Datenerfassungsgeräte bzw. des Datenerfassungssystems 10 sind diese im Datenverwaltungssystem 18 mit ihrer jeweiligen Geräteidentifikation registriert. Nun werden Zugriffsdaten über das Datennetz 22 übertragen. Diese Zugriffsdaten umfassen jeweils eine Geräteidentifikation und eine Zugriffsanweisung, welche eine Zugriffsoperation auf das Datenverwaltungssystem 18 definiert. Die Benutzeridentifikation ist in den Zugriffsdaten vorzugsweise nicht enthalten. Damit kann im Datennetz 22 keine eindeutige Zuordnung von übertragenen Zugriffsdaten und insbesondere von übertragenen Messdaten oder persönlichen Informationen zu bestimmten Benutzern, insbesondere Patienten, erfolgen. Insbesondere ist eine solche Zuordnung für den Hersteller des jeweiligen Datenerfassungsgerätes bzw. für den Anbieter des Datennetzes 22 nicht möglich.

Die Identifizierung des Benutzers (Patienten) erfolgt hierbei erst im Datenverwaltungssystem 18. Dazu weist das Datenverwaltungssystem 18 in der gezeigten bevorzugten Ausführungsform eine Initialisierungseinrichtung 40 auf. Diese ist ausgelegt, die Initialisierungsdaten zu erfassen und eine Geräteautorisierung 42 derart zu erzeugen, dass in der Geräteautorisierung 42 jedem Gerät, dessen Geräteidentifikation erfasst wurde, ein Bereich bzw. Abschnitt bzw. Datensatz bzw. Datenblock einer Datenbank 44 des Datenverwaltungssystems 18 zugewiesen wird, der wiederum durch die zusammen mit der Geräteidentifikation erfassten Benutzeridentifikation bestimmt bzw. festgelegt wird. Die Geräteautorisierung wird vorzugsweise im Datenverwaltungssystem 18 gespeichert und bleibt nach dem Trennen der Initialisierungsverbindung 14 erhalten. Die zugewiesenen Bereiche bzw. Datensätze der Datenbank 44 bilden in der gezeigten Ausführungsform patientenspezifische Gesundheitsakten.

Der Zugriff auf die benutzerspezifischen Datensätze wird über eine Zugriffssteuereinrichtung 46 des Datenverwaltungssystems 18 gesteuert bzw. geregelt. Dazu steht die Zugriffssteuereinrichtung 46 über die Datenschnittstelle 24 mit dem Datennetz 22 in Signalverbindung. Insbesondere erfasst die Zugriffssteuereinrichtung 46 vom Datenerfassungssystem 10 übertragene Zugriffsdaten. In Abhängigkeit von den darin enthaltenen Geräteidentifikationen weist sie die Zugriffsdaten und insbesondere die Zugriffsanweisungen den entsprechenden benutzerspezifischen Datensätzen der Datenbank 44 gemäß der in der Geräteautorisierung 42 hinterlegten Zuordnung zu.

In der gezeigten Ausführungsform sind eine Vielzahl an Akteuren, die insbesondere mit der Verwaltung oder Nutzung des Datenverwaltungssystems 18 im allgemeinen oder mit der Nutzung der Datenbank 44 oder einzelnen Abschnitten und Datensätzen der Datenbank 44 im besonderen betraut sind über das Datennetz 22 mit dem Datenverwaltungssystem 18 verbunden. Insbesondere nutzt vorzugsweise eine Vielzahl an Patienten die Gesundheitsdatenbank über das Datennetz 22, so dass eine Vielzahl an Datenerfassungssystemen mit dem Datennetz 22 verbunden sind. Das Datennetz 22 kann auch ein Vielzahl weiterer Netzwerkdienste 48 bieten, die nicht Teil des Datenverwaltungssystems 18 sind. Auch eine Vielzahl von Datenverwaltungssystemen 18, die vorzugsweise gemäß der vorliegenden Erfindung ausgestaltet sind, können über das Datennetz 22 verbunden sein.

Wie in Fig. 1 gezeigt, sind über das Datennetz 22 vorzugsweise auch Kliniken 50, telemedizinische Zentren 52 und Haus- oder Fachärzte 54 mit dem Datenverwaltungssystem 18 verbunden und können entsprechend einer hinterlegten Autorisierung über das Datennetz 22 auf die Datenbank 44 zugreifen. Wie dargestellt, weist das Datenverwaltungssystem besonders bevorzugt eine Betreuungsschnittstelle 56 auf, über die besonders autorisierte Akteure, wie beispielsweise ausgewählte Kliniken 50, telemedizinische Zentren 52 oder Ärzte 54, mittels eines gesicherten Betreuungsnetzes 58 auf das Datenverwaltungssystem 18 und insbesondere die Datenbank 44 zugreifen können, um beispielsweise Diagnosen für einzelne Patienten zu stellen oder Therapieanweisungen auf der Datenbank 44 zu hinterlegen. Die Autorisierungen für solche Zugriffe könnten insbesondere in einer Betreuerautorisierung 60 definiert sein, die im Datenverwaltungssystem 18 hinterlegt ist und auf die ein Betreuerautorisierungsmodul 62 zur Steuerung von Zugriffsrechten auslesend und/oder schreibend zugreifen kann.

Somit wird durch die vorliegenden Erfindung die Initialisierung bzw. Autorisierung zum Zugriff auf eine Datenbank insbesondere durch Datenerfassungsgeräte vereinfacht und die Datensicherheit verbessert. Die Initialisierung kann vom Benutzer selbst durchgeführt werden und die Zuordnung von personenspezifischen Daten zu einer bestimmten Person bleibt gegenüber dem Datenübertragungsnetz verborgen. Auch ein Austausch defekter Geräte und die Einbindung neuer Geräte kann sehr leicht vollzogen werden. Insbesondere könnte die Erzeugung der Geräteautorisierung 42 automatisiert erfolgen, so dass die Implementierung neuer Geräte oder der Austausch von Geräten schnell, preisgünstig, zuverlässig und bei Einhaltung hoher Datensicherheit und Diskretion erfolgen kann.

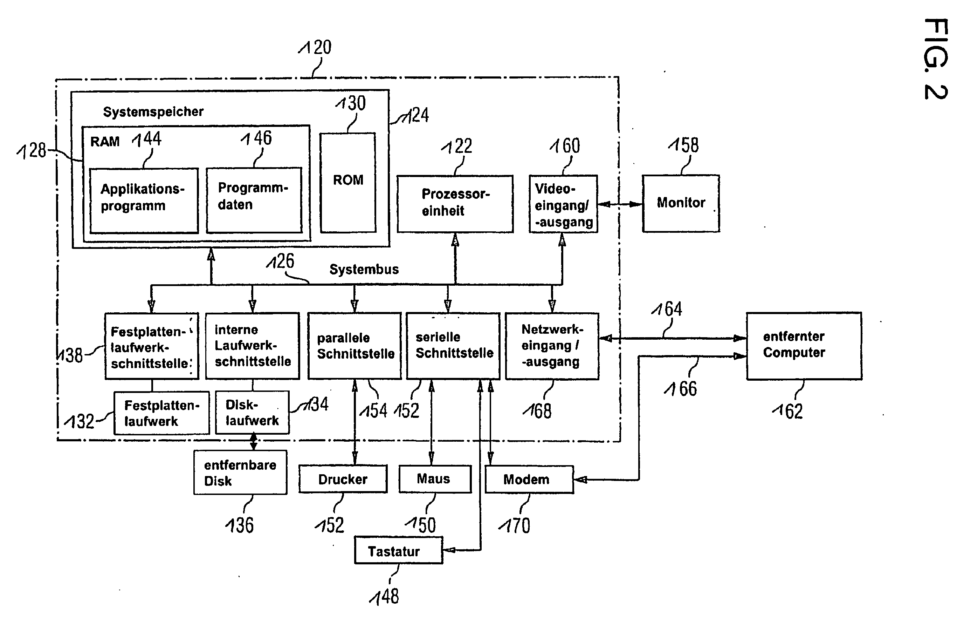

Bezugnehmend auf Figur 2 wird ein beispielhaftes System zum Implementieren der Erfindung beschrieben. Ein beispielhaftes System umfaßt eine universelle Rechnereinrichtung in der Form einer herkömmlichen Rechnerumgebung 120 z.B. ein "personal computer" (PC) 120, mit einer Prozessoreinheit 122, einem Systemspeicher 124 und einem Systembus 126, welcher eine Vielzahl von Systemkomponenten, unter anderem den Systemspeicher 124 und die Prozessoreinheit 122 verbindet. Die Prozessoreinheit 122 kann arithmetische, logische und/oder Kontrolloperationen durchführen, indem auf den Systemspeicher 124 zugegriffen wird. Der Systemspeicher 124 kann Informationen und/oder Instruktionen zur Verwendung in Kombination mit der Prozessoreinheit 122 speichern. Der Systemspeicher 124 kann flüchtige und nichtflüchtige Speicher, beispielsweise "random access memory" (RAM) 128 und "Nur-Lesespeicher" (ROM) 130 beinhalten. Ein Grund-Eingabe-Ausgabe-Sytem (BIOS), das die grundlegenden Routinen enthält, welche helfen, Informationen zwischen den Elementen innerhalb des PCs 120, beispielsweise während des Hochfahrens, zu transferieren, kann in dem ROM 130 gespeichert sein. Der Systembus 126 kann eine von vielen Busstrukturen sein, unter anderem ein Speicherbus oder ein Speichercontroller, ein peripherer Bus und ein lokaler Bus, welcher eine bestimmte Busarchitektur aus einer Vielzahl von Busarchitekturen verwendet.

Der PC 120 kann weiterhin ein Festplattenlaufwerk 132 zum Lesen oder Schreiben einer Festplatte (nicht gezeigt) aufweisen und ein externes Disklaufwerk 134 zum Lesen oder Schreiben einer entfernbaren Disk 136 bzw. eines entfernbaren Datenträgers. Die entfernbare Disk kann eine magnetische Disk bzw. eine magnetische Diskette für ein magnetisches Disklaufwerk bzw. Diskettenlaufwerk oder eine optische Diskette wie z.B. eine CD-ROM für ein optisches Disklaufwerk sein. Das Festplattenlaufwerk 132 und das externe Disklaufwerk 134 sind jeweils mit dem Systembus 126 über eine Festplattenlaufwerkschnittstelle 138 und eine externe Disklaufwerkschnittstelle 140 verbunden. Die Laufwerke und die zugeordneten computerlesbaren Medien stellen einen nichtflüchtigen Speicher computerlesbarer Instruktionen, Datenstrukturen, Programm-Modulen und anderer Daten für den PC 120 zur Verfügung. Die Datenstrukturen können die relevanten Daten zum Implementieren eines wie oben beschriebenen Verfahrens aufweisen. Obwohl die beispielshaft beschriebene Umgebung eine Festplatte (nicht gezeigt) und eine externe Disk 142 verwendet, ist für den Fachmann offensichtlich, daß andere Typen computerlesbarer Medien, welche computerzugreifbare Daten speichern können, in der beispielhaften Arbeitsumgebung verwendet werden können, wie z.B. magnetische Kassetten, Flash-Memory Karten, digitale Videodisketten, Random-Access-Speicher, Nur-Lesespeicher, usw..

Eine Vielzahl von Programm-Modulen, insbesondere ein Betriebssystem (nicht gezeigt) ein oder mehrere Applikationsprogramme 144, oder Programm-Module (nicht gezeigt) und Programmdaten 146, können auf der Festplatte, der externen Disk 142, dem ROM 130 oder dem RAM 128 gespeichert werden. Die Applikationsprogramme können zumindest einen Teil der Funktionalität, wie in Figur 2 gezeigt, umfassen.

Ein Benutzer kann Kommandos und Information, wie oben beschrieben, in den PC 120 anhand von Eingabevorrichtungen, wie z.B. einer Tastatur bzw. eines Keyboards 148 und einer Computermaus 150 eingeben. Andere Eingabevorrichtungen (nicht gezeigt) können ein Mikrofon und/andere Sensoren, einen Joystick, ein Spielpolster bzw. -kissen, einen Scanner oder ähnliches umfassen. Diese oder andere Eingabevorrichtungen können mit der Prozessoreinheit 122 anhand einer seriellen Schnittstelle 152 verbunden sein, welche mit dem System 126 gekoppelt ist, oder können anhand anderer Schnittstellen, wie z.B. einer parallelen Schnittstelle 154, eines Spieleports oder eines universellen seriellen Busses (USB) verbunden sein. Weiterhin kann Information mit einem Drucker 156 gedruckt werden. Der Drucker 156 und andere parallele Eingabe/Ausgabevorrichtungen können mit der Prozessoreinheit 122 durch die parallele Schnittstelle 154 verbunden sein. Ein Monitor 158 oder andere Arten von Anzeigevorrichtung(en) ist/sind mit dem Systembus 126 mittels einer Schnittstelle, wie z.B. eines Videoeingang/-ausgangs 160 verbunden. Zusätzlich zu dem Monitor kann die Rechnerumgebung 120 andere periphere Ausgabevorrichtungen (nicht gezeigt) wie z.B. Lautsprecher oder akustische Ausgänge umfassen.

Die Rechnerumgebung 120 kann mit anderen elektronischen Vorrichtungen z.B. einem Computer, einem Schnurtelefon, einem schnurlosen Telefon, einem persönlichen digitalen Assistenten (PDA), einem Fernseher oder ähnlichem kommunizieren. Um zu kommunizieren, kann die Rechnerumgebung 120 in einer vernetzten Umgebung arbeiten, wobei Verbindungen zu einem oder mehreren elektronischen Vorrichtungen verwendet werden. Figur 10 stellt die mit einem "remote computer" bzw. entfernten Computer 162 vernetzte Rechnerumgebung dar. Der entfernte Computer 162 kann eine andere Rechnerumgebung, wie z.B. ein Server, ein Router, ein Netzwerk-PC, eine gleichwertige bzw. "peer" Vorrichtung oder andere gewöhnliche Netzwerkknoten sein und kann viele oder alle der hinsichtlich der Rechnerumgebung 120 oben beschriebenen Elemente umfassen. Die logischen Verbindungen, wie sie in Figur 10 dargestellt sind, umfassen ein "local area network" (LAN) 164 und ein "wide are network" (WAN) 166. Solche Netzwerkumgebungen sind alltäglich in Büros, firmenweiten Computernetzwerken, Intranetzen und dem Internet.

Wenn eine Rechnerumgebung 120 in einer LAN-Netzwerkumgebung verwendet wird, kann die Rechnerumgebung 120 mit dem LAN 164 durch einen Netzwerkeingang/-ausgang 168 verbunden sein. Wenn die Rechnerumgebung 120 in einer WAN-Netzwerkumgebung verwendet wird, kann die Rechnerumgebung 120 ein Modem 170 oder andere Mittel zum Herstellen einer Kommunikation über das WAN 166 umfassen. Das Modem 170, welches intern und extern bezüglich der Rechnerumgebung 120 sein kann, ist mit dem Systembus 126 mittels der seriellen Schnittstelle 152 verbunden. In der Netzwerkumgebung können Programm-Module, welche relativ zu der Rechnerumgebung 120 dargestellt sind, oder Abschnitte davon in einer entfernten Speichereinrichtung gespeichert sein, welche an oder von einem entfernten Computer 162 zugreifbar bzw. systemeigen sind. Weiterhin können andere Daten, welche für das oben beschriebene Verfahren bzw. System relevant sind, auf oder von dem entfernten Computer 162 zugreifbar vorliegen.

### Bezugszeichenliste

- 10: Datenerfassungssystem
- 12, 16: Initialisierungsschnittstelle
- 14: Initialisierungs- bzw. Autorisierungsnetz bzw. -verbindung
- 18: Datenverwaltungssystem
- 20, 24: Datenschnittstelle, Telematikschnittstelle
- 22: Datennetz, Telematiknetzwerk
- 26: Blutdruckmessgerät
- 28: Elektrokardiograph bzw. EKG-Gerät
- 30: Waage
- 32: Personal Digital Assistant (PDA), Basisgerät
- 34: lokale Schnittstelle
- 36: lokales Netzwerk
- 38: Initialisierungselement
- 40: Initialisierungseinrichtung
- 42: Geräteautorisierung
- 44: Datenbank
- 46: Zugriffssteuereinrichtung
- 48: Netzwerkdienste
- 50: Kliniken
- 52: telemedizinische Zentren
- 54: Ärzte
- 56: Betreuungsschnittstelle
- 58: Betreuungsnetz
- 60: Betreuerautorisierung
- 62: Betreuerautorisierungsmodul
- 120: Rechnerumgebung
- 122: Prozessoreinheit
- 124: Systemspeicher
- 126: Systembus
- 128: random access memory (RAM)
- 130: Nur-Lesespeicher (ROM)
- 132: Festplattenlaufwerk
- 134: Disklaufwerk
- 136: entfernbare Disk
- 138: Festplattenlaufwerkschnittstelle
- 140: Disklaufinrerkschnittstelle
- 142: externe Disk
- 144: Applikationsprogramm
- 146: Programmdaten
- 148: Tastatur
- 150: Computermaus
- 152: serielle Schnittstelle
- 154: parallele Schnittstelle
- 156: Drucker
- 158: Monitor
- 160: Videoeingang/ -ausgang
- 162: entfernter Computer
- 164: "local area network" (LAN)
- 166: "wide are network" (WAN)
- 168: Netzwerkeingang/ -ausgang

## Patentansprüche

1. Verfahren zur Zugriffsautorisierung auf eine Datenbank (44) umfassend die Schritte:
- Herstellen einer Signalverbindung zu einem Datenerfassungsgerät (26, 28, 30, 32) eines Benutzers über ein Initialisierungsnetz (14);
- Erfassen von Initialisierungsdaten für das Datenerfassungsgerät (26, 28, 30, 32) über das Initialisierungsnetz (14), wobei die Initialisierungsdaten umfassen:
-- eine Benutzeridentifikation zur eindeutigen Identifikation des Benutzers; und
-- eine Geräteidentifikation zur eindeutigen Identifikation des Datenerfassungsgerätes;
- Erzeugen einer Geräteautorisierung (42), in der die Geräteidentifikation in Abhängigkeit von der Benutzeridentifikation einem benutzerspezifischen Datenblock der Datenbank (44) zugewiesen wird;
- Herstellen einer Signalverbindung zum Datenerfassungsgerät (26, 28, 30, 32) über ein vom Initialisierungsnetz (14) verschiedenes Datennetz (22);
- Erfassen von Zugriffsdaten von dem Datenerfassungsgerät (26, 28, 30, 32) über das Datennetz (22), wobei die Zugriffsdaten umfassen:
-- die Geräteidentifikation; und
-- zumindest eine Zugriffsanweisung zur Bestimmung einer Zugriffsoperation auf die Datenbank (44); und
- Ausführen der Zugriffsoperation auf den benutzerspezifischen Datenblock der Datenbank in Abhängigkeit von den erfassten Zugriffsdaten und der erzeugten Geräteautorisierung (42).

2. Verfahren nach Anspruch 1, wobei eine zum Erfassen der Initialisierungsdaten über das Initialisierungsnetz (14) hergestellte Signalverbindung zum Datenerfassungsgerät (26, 28, 30, 32) unterbrochen wird, bevor die Zugriffsdaten über das Datennetz (22) erfasst werden.

3. Verfahren nach Anspruch 1 oder 2, wobei das Initialisierungsnetz (14) ein Telekommunikationsnetz umfasst und das Erfassen der Benutzeridentifikation ein Erfassen einer vom Benutzer gewählten Telefonnummer umfasst.

4. Verfahren nach einem der vorangehenden Ansprüche, wobei das Erfassen der Geräteidentifikation ein Erfassen eines von dem Datenerfassungsgerät (26, 28, 30, 32) erzeugten und über das Initialisierungsnetz (14) übertragenen akustischen Identifikationssignals umfasst.

5. Verfahren nach einem der vorangehenden Ansprüche, wobei im Schritt des Erzeugens der Geräteautorisierung (42) der erfassten Geräteidentifikation erlaubte Zugriffsoperationen auf den benutzerspezifischen Datenblock der Datenbank (44) in Abhängigkeit von der Benutzeridentifikation zugewiesen werden.

6. Verfahren nach einem der vorangehenden Ansprüche, wobei die Geräteautorisierung (42) einen Schreibzugriff erlaubt, die Zugriffsanweisung vom Datenerfassungsgerät (26, 28, 30, 32) erfasste benutzerspezifische Daten und einen Schreibbefehl umfasst, und wobei das Verfahren einen Schritt des Schreibens der benutzerspezifischen Daten in den benutzerspezifischen Datenblock der Datenbank (44) umfasst.

7. Verfahren nach einem der vorangehenden Ansprüche, wobei die Geräteautorisierung (42) einen Lesezugriff erlaubt, die Zugriffsanweisung einen Lesebefehl umfasst und wobei das Verfahren einen Schritt des Ausgebens von benutzerspezifischen Daten aus dem benutzerspezifischen Datenblock der Datenbank (44) an das Datennetz (22) zur Übertragung an das Datenerfassungsgerät (32) des Benutzers umfasst.

8. Verfahren nach einem der vorangehenden Ansprüche, wobei das Erfassen der Benutzeridentifikation und/oder das Erfassen der Geräteidentifikation ein Erfassen einer Datensatzidentifikation zur eindeutigen Bestimmung des benutzerspezifischen Datenblocks der Datenbank (44) umfasst.

9. Verfahren zum autorisierten Zugriff auf eine Datenbank (44) umfassend die Schritte:
- Herstellen einer Signalverbindung zu einem Datenverwaltungssystem (18) über ein Initialisierungsnetz (14);
- Übermitteln von Initialisierungsdaten für ein Datenerfassungsgerät (26, 28, 30, 32) eines Benutzers über das Initialisierungsnetz (14) an das Datenverwaltungssystem (18), wobei die Initialisierungsdaten umfassen:
-- eine Benutzeridentifikation zur eindeutigen Identifikation des Benutzers; und
-- eine Geräteidentifikation zur eindeutigen Identifikation des Datenerfassungsgerätes (26, 28, 30, 32);
- Herstellen einer Signalverbindung zum Datenverwaltungssystem (18) über ein vom Initialisierungsnetz (14) verschiedenes Datennetz (22); und
- Übermitteln von Zugriffsdaten von dem Datenerfassungsgerät (26, 28, 30, 32) über ein Datennetz (22) an das Datenverwaltungssystem (18), wobei die Zugriffsdaten umfassen:
-- die Geräteidentifikation; und
-- zumindest eine Zugriffsanweisung, welche eine Zugriffsoperation auf die Datenbank (44) festlegt.

10. Verfahren nach Anspruch 9, wobei eine zum Übermitteln der Initialisierungsdaten über das Initialisierungsnetz (14) hergestellte Signalverbindung zum Datenverwaltungssystem unterbrochen wird, bevor die Zugriffsdaten über das Datennetz (22) übermittelt werden.

11. Verfahren nach Anspruch 9 oder 10, wobei das Initialisierungsnetz (14) ein Telekommunikationsnetz umfasst und der Schritt des Übermittelns der Benutzeridentifikation einen Schritt des Wählens einer benutzerspezifischen Telefonnummer umfasst.

12. Verfahren nach einem der Ansprüche 9 bis 11, wobei das Initialisierungsnetz (14) ein Telekommunikationsnetz umfasst und der Schritt der Übermittelns der Geräteidentifikation über das Initialisierungsnetz (14) einen Schritt des Übertragens eines gerätespezifischen akustischen Identifikationssignals über das Telekommunikationsnetz an das Datenverwaltungssystem (18) umfasst.

13. Verfahren nach einem der vorangehenden Ansprüche, wobei das Datennetz (22) ein GPRS- und/oder UMTS-Netz umfasst.

14. Verfahren nach einem der vorangehenden Ansprüche, wobei die Datenbank (44) eine Gesundheitsdatenbank und der Benutzer ein Patient ist.

15. Datenverwaltungssystem zur Zugriffsautorisierung auf eine Datenbank (44) umfassend:
- die Datenbank (44) mit einer Vielzahl von benutzerspezifischen Datenblöcken;
- eine Initialisierungsschnittstelle (16) zum Erfassen von Initialisierungsdaten für ein Datenerfassüngsgerät (26, 28, 30, 32) eines Benutzers über ein Initialisierungsnetz (14), wobei die Initialisierungsdaten umfassen:
-- eine Benutzeridentifikation zur eindeutigen Identifikation des Benutzers; und
-- eine Geräteidentifikation zur eindeutigen Identifikation des Datenerfassungsgerätes;
- eine Datenschnittstelle (24) zum Erfassen von Zugriffsdaten von dem Datenerfassungsgerät (26, 28, 30, 32) über ein vom Initialisierungsnetz (14) verschiedenes Datennetz (22), wobei die Zugriffsdaten die Geräteidentifikation und zumindest eine Zugriffsanweisung zur Bestimmung einer Zugriffsoperation auf die Datenbank (44) umfassen;
- eine Initialisierungseinrichtung (40) zum Erzeugen einer Geräteautorisierung (42), in der die Geräteidentifikation ein Abhängigkeit von der Benutzeridentifikation einem benutzerspezifischen Datenblock der Datenbank (44) zugewiesen wird; und
- eine Zugriffssteuereinrichtung (46), zum Ausführen der Zugriffsoperation auf den benutzerspezifischen Datenblock der Datenbank (44) in Abhängigkeit von den erfassten Zugriffsdaten und der erzeugten Geräteautorisierung (42).

16. System nach Anspruch 15, wobei die Initialisierungsschnittstelle (16) eine Schnittstelle eines Telekommunikationsnetzes umfasst und das System ausgelegt ist, eine vom Benutzer gewählte Telefonnummer zu erfassen.

17. System nach Anspruch 16, welches außerdem eine Serviceeinrichtung umfasst, die ausgelegt ist, in Abhängigkeit von der erfassten Telefonnummer dem Benutzer eine Vielzahl von auswählbaren Servicediensten anzubieten.

18. System nach Anspruch 16 oder 17, wobei die Initialisierungseinrichtung (40) ausgelegt ist, die von der Initialisierungsschnittstelle (16) erfasste Telefonnummer als Benutzeridentifikation und ein über das Telekommunikationsnetz übertragenes akustisches Identifikationssignal als Geräteidentifikation zu erfassen.

19. Datenerfassungssystem (10) zum autorisierten Zugriff auf eine Datenbank (44) umfassend:
- zumindest ein Datenerfassungsgerät (26, 28, 30, 32) zum Erfassen von Messdaten und/oder zum Eingeben bzw. Ausgeben, insbesondere Anzeigen, von Eingabe- bzw. Ausgabeinformationen;
- einen Geräteidentifikationsspeicher, in der eine Geräteidentifikation zur eindeutigen Identifikation des Datenerfassungsgerätes (26, 28, 30, 32) kodiert gespeichert ist;
- eine Initialisierungsschnittstelle (12) zum Übermitteln der Geräteidentifikation des Datenerfassungsgerätes (26, 28, 30, 32) über ein Initialisierungsnetz (14) an ein Datenverwaltungssystem (18), welches die Datenbank (44) umfasst; und
- eine Datenschnittstelle (20) zum Übermitteln von Zugriffsdaten über ein vom Initialisierungsnetz verschiedenes Datennetz (22) an das Datenverwaltungssystem (18) derart, dass die Zugriffsdaten die Geräteidentifikation und zumindest eine Zugriffsanweisung zur Bestimmung einer Zugriffsoperation auf die Datenbank umfassen.

20. System nach Anspruch 19, welches zumindest ein Messgerät (26, 28, 30) und ein Basisgerät (32) umfasst, die als separate Komponenten ausgebildet sind und über ein lokales Netzwerk (36) in Signalverbindung zueinander stehen.

21. System nach Anspruch 20, wobei das lokale Netzwerk (36) ein drahtloses Netzwerk, insbesondere ein Bluetooth-Netzwerk und/oder wireless local area network (WLAN), umfasst.

22. System nach Anspruch 20 oder 21, wobei das zumindest eine Messgerät (26, 28, 30) und das Basisgerät (32) jeweils eine eigene Initialisierungsschnittstelle (12) aufweisen.

23. System nach einem der Ansprüche 19 bis 22, wobei die Initialisierungsschnittstelle (12) einen Lautsprecher, insbesondere einen Piezolautsprecher umfasst.

24. System nach einem der Ansprüche 15 bis 23, wobei die Datenschnittstelle (20) eine Schnittstelle zu einem GPRS- und/oder UMTS-Netz umfasst.

25. Computerprogrammprodukt, das, wenn es in einem Computersystem geladen ist, dieses veranlasst, ein Verfahren gemäß einem der Ansprüche 1 bis 14 auszuführen.

## Claims

1. A method for authorising access to a database (44), comprising the steps of:
- establishing a signal communication to a data acquisition device (26, 28, 30, 32) of a user via an initialisation network (14);
- acquiring initialisation data for the data acquisition device (26, 28, 30, 32) via the initialisation network (14), said initialisation data comprising:
- a user identification for unambiguously identifying the user; and
- a device identification for unambiguously identifying the data acquisition device;
- generating a device authorisation (42) in which the device identification is assigned to a user-specific data block of the database (44) depending on the user identification;
- establishing a signal communication to the data acquisition device (26, 28, 30, 32) via a data network (22) different from said initialisation network (14);
- acquiring access data from said data acquisition device (26, 28, 30, 32) via the data network (22), said access data comprising:
- the device identification; and
- at least one access instruction for determining an access operation to the database (44); and
- executing the access operation to the user-specific data block of the database depending on the acquired access data and the generated device authorisation (42).

2. The method according to claim 1, wherein a signal communication to the data acquisition device (26, 28, 30, 32) established via the initialisation network (14) to acquire the initialisation data is interrupted before the access data are acquired via the data network (22).

3. The method according to claim 1 or 2, wherein the initialisation network (14) comprises a telecommunication network, and the detecting of the user identification comprises detecting a telephone number dialed by the user.

4. The method according to one of the preceding claims, wherein the detection of the device identification comprises detecting an acoustic signal generated by the data acquisition device (26, 28, 30, 32) and transmitted via the initialisation network (14).

5. The method according to one of the preceding claims, wherein in the step of generating the device authorisation (42), the detected device identification is assigned permissible access operations to the user-specific data block of the database (44) depending on the user identification.

6. The method according to one of the preceding claims, wherein the device authorisation (42) permits a write access, the access instruction comprises user-specific data generated by the data acquisition device (26, 28, 30, 32) as well as a write command, and wherein the method comprises a step of writing the user-specific data into the user-specific data block of the database (44).

7. The method according to one of the preceding claims, wherein the device authorisation (42) permits a read access, the access instruction comprises a read command, and wherein the method comprises a step of outputting user-specific data from the user-specific data block of the database (44) to the data network (22) for transmission to the data acquisition device (32) of the user.

8. The method according to one of the preceding claims, wherein the detection of the user identification and/or the detection of the device identification comprise(s) detecting a dataset identification for unambiguously determining the user-specific data block of the database (44).

9. A method for authorised access to a database (44), comprising the steps of:
- establishing a signal communication to a data management system (18) via an initialisation network (14);
- transmitting initialisation data for a data acquisition device (26, 28, 30, 32) of a user to the data management system (18) via the initialisation network (14), said initialisation data comprising:
- a user identification for unambiguously identifying the user; and
- a device identification for unambiguously identifying the data acquisition device (26, 28, 30, 32);
- establishing a signal communication to the data management system (18) via a data network (22) different from said initialisation network (14);
- transmitting access data from said data acquisition device (26, 28, 30, 32) to the data management system (18) via a data network (22), said access data comprising:
- the device identification; and
- at least one access instruction for determining an access operation to the database (44).

10. The method according to claim 9, wherein a signal communication to the data management system established via the initialisation network (14) to transmit the initialisation data is interrupted before the access data are transmitted via the data network (22).

11. The method according to claim 9 or 10, wherein the initialisation network (14) comprises a telecommunication network, and the step of transmitting the user identification comprises a step of dialing a user-specific telephone number.

12. The method according to one of claims 9 to 11, wherein the initialisation network (14) comprises a telecommunication network, and the step of transmitting the device identification via the initialisation network (14) comprises a step of transmitting a device-specific acoustic identification signal to the data management system (18) via the telecommunication network.

13. The method according to one of the preceding claims, wherein the data network (22) comprises a GPRS and/or a UMTS network.

14. The method according to one of the preceding claims, wherein the database (44) is a health database and the user is a patient.

15. A data management system for authorising access to a database (44), comprising:
- the database (44) with a plurality of user-specific data blocks;
- an initialisation interface (16) for acquiring initialisation data for a data acquisition device (26, 28, 30, 32) of a user via an initialisation network (14), said initialisation data comprising:
- a user identification for unambiguously identifying the user; and
- a device identification for unambiguously identifying the data acquisition device;
- a data interface (24) for acquiring access data from the data acquisition device (26, 28, 30, 32) via a data network (22) different from said initialisation network (14), wherein the access data comprise the device identification and at least one access instruction for determining an access operation to the database (44);
- an initialisation device (40) for generating a device authorisation (42), in which the device identification is assigned to a user-specific data block of the database (44) depending on the user identification; and
- an access control device (46) for executing the access operation to the user-specific data block of the database (44) depending on the acquired access data and the generated device authorisation (42).

16. The system according to claim 15, wherein the initialisation interface (16) comprises an interface of a telecommunication network, and the system is designed to detect a telephone number dialed by the user.

17. The system according to claim 16, further comprising a service device designed to offer the user a plurality of selectable services depending on the detected telephone number.

18. The system according to claim 16 or 17, wherein the initialisation device (40) is designed to detect the telephone number detected by the initialisation interface (16) and an acoustic identification signal transmitted via the telecommunication network as user identification and as device identification, respectively.

19. A data acquisition system (10) for authorised access to a database (44), comprising:
- at least one data acquisition device (26, 28, 30, 32) for acquiring measurement data and/or for inputting and outputting, in particular displaying, input and output information;
- a device identification memory in which a device identification for unambiguously identifying the data acquisition device (26, 28, 30, 32) is stored in an encoded fashion;
- an initialisation interface (12) for transmitting the device identification of the data acquisition device (26, 28, 30, 32) to a data management system (18) via an initialisation network (14), said data management system comprising the database (44); and
- a data interface (20) for transmitting access data to the data management system (18) via a data network (22) different from said initialisation network such that the access data comprise the device identification and at least one access instruction for determining an access operation to the database.

20. The system according to claim 19, comprising at least one measuring device (26, 28, 30) and one base device (32) formed as separate components and which are in signal communication with each other via a local network (36).

21. The system according to claim 20, wherein the local network (36) comprises a wireless network, in particular a Bluetooth network and/or a wireless local area network (WLAN).

22. The system according to claim 20 or 21, wherein the at least one measuring device (26, 28, 30) and the base device (32) each have an initialisation interface (12) of their own.

23. The system according to one of claims 19 to 22, wherein the initialisation interface (12) comprises a loudspeaker, in particular a piezo loudspeaker.

24. The system according to one of claims 15 to 23, wherein the data interface (20) comprises an interface to a GPRS and/or a UMTS network.

25. A computer programme product, which, when loaded in a computer system, causes same to execute a method according to one of claims 1 to 14.

## Revendications

1. Procédé pour l'autorisation d'accès à une base de données (44) comportant les étapes suivantes :
- l'établissement d'une liaison par signal vers un appareil de saisie des données (26, 28, 30, 32) d'un utilisateur par l'intermédiaire d'un réseau d'initialisation (14) ;
- la saisie des données d'initialisation pour l'appareil de saisie des données (26, 28, 30, 32) par l'intermédiaire du réseau d'initialisation (14), sachant que les données d'initialisation comportent :
- une identification de l'utilisateur pour l'identification sans équivoque de l'utilisateur ; et
- une identification de l'appareil pour l'identification sans équivoque de l'appareil de saisie des données ;
- la génération d'une autorisation de l'appareil (42) dans laquelle l'identification de l'appareil est attribuée à un bloc de données spécifique à l'utilisateur et se trouvant dans la base de données (44) en fonction de l'identification de l'utilisateur ;
- l'établissement d'une liaison par signal vers l'appareil de saisie des données (26, 28, 30, 32) par l'intermédiaire d'un réseau de données (22) qui diffère du réseau d'initialisation (14) ;
- la saisie des données d'accès par l'appareil de saisie des données (26, 28, 30, 32) par l'intermédiaire du réseau de données (22), sachant que les données d'accès comportent :
- l'identification de l'appareil ; et
- au moins une instruction d'accès afin de déterminer une opération d'accès à la base de données (44) ; et
- l'exécution de l'opération d'accès au bloc de données spécifique à l'utilisateur et se trouvant dans la base de données en fonction des données d'accès saisies et de l'autorisation de l'appareil générée (42).

2. Procédé selon la revendication 1, dans lequel une liaison par signal établie vers l'appareil de saisie des données (26, 28, 30, 32) pour saisir les données d'initialisation par l'intermédiaire du réseau d'initialisation (14) est interrompue avant que les données d'accès soient saisies par l'intermédiaire du réseau de données (22).

3. Procédé selon l'une ou l'autre des revendications 1 et 2, dans lequel le réseau d'initialisation (14) comporte un réseau de télécommunication et dans lequel la saisie de l'identification de l'utilisateur comporte une saisie d'un numéro de téléphone composé par l'utilisateur.

4. Procédé selon l'une des revendications précédentes, dans lequel la saisie de l'identification de l'appareil comporte une saisie d'un signal d'identification acoustique généré par l'appareil de saisie des données (26, 28, 30, 32) et transmis par l'intermédiaire du réseau d'initialisation (14).

5. Procédé selon l'une des revendications précédentes, dans lequel des opérations d'accès permises au bloc de données spécifique à l'utilisateur et se trouvant dans la base de données (44) pendant l'étape de la génération de l'autorisation de l'appareil (42) de l'identification saisie de l'appareil sont attribuées en fonction de l'identification de l'utilisateur.

6. Procédé selon l'une des revendications précédentes, dans lequel l'autorisation de l'appareil (42), laquelle comporte une instruction d'accès et des données spécifiques à l'utilisateur saisies par l'appareil de saisie des données (26, 28, 30, 32) ainsi qu'une instruction d'écriture, permet un accès d'écriture et dans lequel le procédé comporte une étape de l'écriture des données spécifiques à l'utilisateur dans le bloc de données spécifique à l'utilisateur et se trouvant dans la base de données (44).

7. Procédé selon l'une des revendications précédentes, dans lequel l'autorisation de l'appareil (42), laquelle comporte une instruction d'accès et une instruction de lecture, permet un accès de lecture et dans lequel le procédé comporte une étape de la sortie des données spécifiques à l'utilisateur depuis le bloc de données spécifique à l'utilisateur et se trouvant dans la base de données (44) vers le réseau de données (22) pour la transmission à l'appareil de saisie des données (32) de l'utilisateur.

8. Procédé selon l'une des revendications précédentes, dans lequel la saisie de l'identification de l'utilisateur et/ou la saisie de l'identification de l'appareil comporte une saisie de l'identification de l'enregistrement des données pour la détermination sans équivoque du bloc de données spécifique à l'utilisateur et se trouvant dans la base de données (44).

9. Procédé destiné à l'accès autorisé à une base de données (44) comportant les étapes suivantes :
- l'établissement d'une liaison par signal vers un système de gestion des données (18) par l'intermédiaire d'un réseau d'initialisation (14) ;
- la transmission des données d'initialisation pour un appareil de saisie des données (26, 28, 30, 32) d'un utilisateur au système de gestion des données (18) par l'intermédiaire du réseau d'initialisation (14), sachant que les données d'initialisation comportent :
- une identification de l'utilisateur pour l'identification sans équivoque de l'utilisateur ; et
- une identification de l'appareil pour l'identification sans équivoque de l'appareil de saisie des données (26, 28, 30, 32) ;
- l'établissement d'une liaison par signal vers le système de gestion des données (18) par l'intermédiaire d'un réseau de données (22) qui diffère du réseau d'initialisation (14) ; et
- la transmission des données d'accès de l'appareil de saisie des données (26, 28, 30, 32) au système de gestion des données (18) par l'intermédiaire d'un réseau de données (22), sachant que les données d'accès comportent :
- l'identification de l'appareil ; et
- au moins une instruction d'accès qui définit une opération d'accès à la base de données (44).

10. Procédé selon la revendication 9, dans lequel une liaison par signal établie pour transmettre les données d'initialisation par l'intermédiaire du réseau d'initialisation (14) vers le système de gestion des données est interrompue avant que les données d'accès soient transmises par l'intermédiaire du réseau de données (22).

11. Procédé selon l'une ou l'autre des revendications 9 et 10, dans lequel le réseau d'initialisation (14) comporte un réseau de télécommunication et dans lequel l'étape de la transmission de l'identification de l'utilisateur comporte une étape consistant à composer un numéro de téléphone spécifique à l'utilisateur.

12. Procédé selon l'une des revendications 9 à 11, dans lequel le réseau d'initialisation (14) comporte un réseau de télécommunication et dans lequel l'étape de la transmission de l'identification de l'appareil par l'intermédiaire du réseau d'initialisation (14) comporte une étape consistant à transférer un signal d'identification acoustique spécifique à l'appareil au système de gestion des données (18) par l'intermédiaire du réseau de télécommunication.

13. Procédé selon l'une des revendications précédentes, dans lequel le réseau de données (22) comporte un réseau GPRS et/ou UMTS

14. Procédé selon l'une des revendications précédentes, dans lequel la base de données (44) est une base de données concernant la santé et dans lequel l'utilisateur est un patient.

15. Système de gestion des données pour l'autorisation d'accès à une base de données (44) comportant les composants suivants :
- la base de données (44) avec une pluralité de blocs de données spécifiques à l'utilisateur ;
- une interface d'initialisation (16) afin de saisir des données d'initialisation pour un appareil de saisie des données (26, 28, 30, 32) d'un utilisateur par l'intermédiaire d'un réseau d'initialisation (14), sachant que les données d'initialisation comportent :
- une identification de l'utilisateur pour l'identification sans équivoque de l'utilisateur ; et
- une identification de l'appareil pour l'identification sans équivoque de l'appareil de saisie des données ;
- une interface de données (24) afin de saisir des données d'accès de l'appareil de saisie des données (26, 28, 30, 32) par l'intermédiaire d'un réseau de données (22) qui diffère du réseau d'initialisation (14), sachant que les données d'accès comportent l'identification de l'appareil et au moins une instruction d'accès afin de déterminer une opération d'accès à la base de données (44) ;
- un dispositif d'initialisation (40) afin de générer une autorisation de l'appareil (42) dans laquelle l'identification de l'appareil est attribuée à un bloc de données spécifique à l'utilisateur et se trouvant dans la base de données (44) en fonction de l'identification de l'utilisateur ; et
- un dispositif de commande d'accès (46) afin d'exécuter l'opération d'accès au bloc de données spécifique à l'utilisateur et se trouvant dans la base de données (44) en fonction des données d'accès saisies et de l'autorisation de l'appareil générée (42).

16. Système selon la revendication 15, dans lequel l'interface d'initialisation (16) comporte une interface d'un réseau de télécommunication et dans lequel le système est conçu pour saisir un numéro de téléphone composé par l'utilisateur.

17. Système selon la revendication 16, lequel comporte en outre un dispositif de service qui est conçu pour proposer à l'utilisateur une pluralité d'utilitaires de service pouvant être sélectionnés en fonction du numéro de téléphone saisi.

18. Système selon l'une ou l'autre des revendications 16 et 17, dans lequel le dispositif d'initialisation (40) est conçu pour saisir le numéro de téléphone saisi par l'interface d'initialisation (16) comme identification de l'utilisateur et pour saisir un signal d'identification acoustique transféré par l'intermédiaire du réseau de télécommunication comme identification de l'appareil.

19. Système de saisie des données (10) destiné à l'accès autorisé à une base de données (44) comportant les composants suivants :
- au moins un appareil de saisie des données (26, 28, 30, 32) afin de saisir des données de mesure et/ou pour entrer ou sortir, en particulier afficher, des informations d'entrée ou de sortie ;
- une mémoire d'identification de l'appareil dans laquelle une identification de l'appareil est mémorisée en étant codée pour l'identification sans équivoque de l'appareil de saisie des données (26, 28, 30, 32) ;
- une interface d'initialisation (12) afin de transmettre l'identification de l'appareil de saisie des données (26, 28, 30, 32) à un système de gestion des données (18) par l'intermédiaire d'un réseau d'initialisation (14), lequel comporte la base de données (44) ; et
- une interface de données (20) afin de transmettre des données d'accès par l'intermédiaire d'un réseau de données (22) qui diffère du réseau d'initialisation au système de gestion des données (18) de telle sorte que les données d'accès comportent l'identification de l'appareil et au moins une instruction d'accès afin de déterminer une opération d'accès à la base de données (44).

20. Système selon la revendication 19, lequel comporte au moins un appareil de mesure (26, 28, 30) et un appareil de base (32) qui sont réalisés comme composants séparés et qui sont en liaison par signal l'un avec l'autre par l'intermédiaire d'un réseau local (36).

21. Système selon la revendication 20, dans lequel le réseau local (36) comporte un réseau sans fil, en particulier un réseau Bluetooth et/ou un réseau WLAN (« wireless local area network »).

22. Système selon l'une ou l'autre des revendications 20 et 21, dans lequel le au moins un appareil de mesure (26, 28, 30) et l'appareil de base (32) présentent respectivement une propre interface d'initialisation (12).

23. Système selon l'une des revendications 19 à 22, dans lequel l'interface d'initialisation (12) comporte un haut-parleur, en particulier un haut-parleur piézoélectrique.

24. Système selon l'une des revendications 15 à 23, dans lequel l'interface de données (20) comporte une interface vers un réseau GPRS ou vers un réseau UMTS.

25. Produit de programme d'ordinateur qui, lorsqu'il est chargé dans un système informatique, incite celui-ci à exécuter un procédé conformément à l'une des revendications 1 à 14.
